# EUROPÄISCHE PATENTANMELDUNG

(11) **EP 0 848 564 A2**
(43) Veröffentlichungstag der Anmeldung: **17.06.1998**
(21) Anmeldenummer: 97110988.9
(22) Anmeldetag: 02.07.1997
(51) Int. Cl.: H04Q 7/22

(54) **Verfahren zur Übermittlung von lokalen Informationen an ein mobiles Sendeempfangsgerät**

(30) Priorität: 11.12.1996 DE 19651453
(71) Anmelder: ROBERT BOSCH GMBH, 70442 Stuttgart (DE)
(72) Erfinder: Mueller, Joerg-Martin, 71409 Schwaikheim (DE)

(57) **Zusammenfassung**

Es wird ein Verfahren zur Datenübertragung zwischen einem mobilen Sende/Empfangsgerät und einer Funkbasisstation vorgeschlagen, in dem es möglich ist, durch Eingabe Positionsdaten Informationen über diese Position abzufragen.

## Beschreibung

### Stand der Technik

Die Erfindung geht aus von einem Verfahren zur Datenübermittlung nach der Gattung des unabhängigen Anspruchs, sowie einer Vorrichtung zur Durchführung des Verfahrens nach dem unabhängigen Anspruch.

Aus der bislang unveröffentlichten Anmeldung DE 19614777 ist ein Verfahren zur Datenübermittlung von einer Funkstation zu einem mobilen Sende/Empfangsgerät bekannt, wobei in diesem Fall eine Verbindung zwischen einem Navigationsgerät an Bord eines Fahrzeugs zu einem zentralen Rechner hergestellt wird. Dabei werden Positionsdaten des Fahrzeuges übermittelt, aus denen der zentrale Rechner Anweisungen für die Weiterfahrt des Fahrzeugs berechnet und an das Navigationsgerät überträgt. Die von der zentralen Basisstation übermittelten Daten enthalten Informationen, die sich auf den aktuellen Standort des Navigationsgeräts beziehen. Nach diesem Verfahren wird die Position des Navigationsgeräts selbst über eine Satellitenpositionsbestimmung ermittelt. Die Positionsbestimmung über satellitengestützte Systeme ist ein aufwendiges Verfahren, das zudem in der Ortsauflösung begrenzt ist.

### Vorteile der Erfindung

Das erfindungsgemäße Verfahren zur Datenübermittlung von einer Funkbasisstation zu einer mobilen Sende/Empfangseinheit, wobei die Daten Informationen enthalten, die sich auf den aktuellen Standort des Sende/Empfangsgeräts beziehen, hat den Vorteil, daß die Ortsauflösung für den Standort des Sende/Empfangsgeräts sehr gut ist. Dies wird durch eine direkte Eingabe von Positionsdaten, die in geeigneter Weise vorliegen müssen, erreicht. Die Positionsdaten dienen im weiteren nach erfolgreicher Aufnahme der Verbindung mit der Funkbasisstation als Zugang zu Informationen einer Datenbank, die abgerufen und zum Sende/Empfangsgerät übertragen werden können.
Durch die in den Unteransprüchen aufgeführten Maßnahmen sind vorteilhafte Weiterbildungen und Verbesserungen des im unabhängigen Anspruch angegebenen Verfahrens möglich. Je nach Anforderung des erfindungsgemäßen Verfahrens kann der aktuelle Standort über einen Barcode gekennzeichnet sein, der von einem Barcode-Scanner eingelesen wird. Alternativ dazu ist ein Verfahren anzusehen, das den aktuellen Standort über eine Tastatur des Sende/Empfangsgeräts eingibt. Eine besonders elegante Lösung ist die Eingabe des aktuellen Standorts über eine Transponderverbindung mit der aktuellen Standortposition.

Das erfindungsgemäße Verfahren zur Datenübermittlung arbeitet sowohl nach dem DECT-Verfahren oder dem GSM-Verfahren.

Vorteilhafterweise werden zur Steuerung der Datenbank Befehle definiert.

Das Verfahren arbeitet in einem Standby-Mode bis zum Ablauf einer Zeit tₑ, wenn keine weiteren Eingaben von Positionsdaten erfolgen.

Die erfindungsgemäße Vorrichtung zur Durchführung des Verfahrens zur Datenübermittlung weist Mittel zur Eingabe des aktuellen Standorts auf. Zudem ist es von Vorteil, wenn das Sende/Empfangsgerät eine Schnittstelle zum Anschluß von Eingabe- und/oder Ausgabeeinheiten besitzt.

### Zeichnung

Ein Ausführungsbeispiel der Erfindung ist in der Zeichnung dargestellt und in der nachfolgenden Beschreibung näher erläutert. Es zeigt Figur 1 das erfindungsgemäße Verfahren zur Datenübermittlung, Figur 2 ein Beispiel der Standorteingabe mit Barcode-Scanner und Figur 3 den Ablauf des Verfahrens.

### Beschreibung des Ausführungsbeispiels

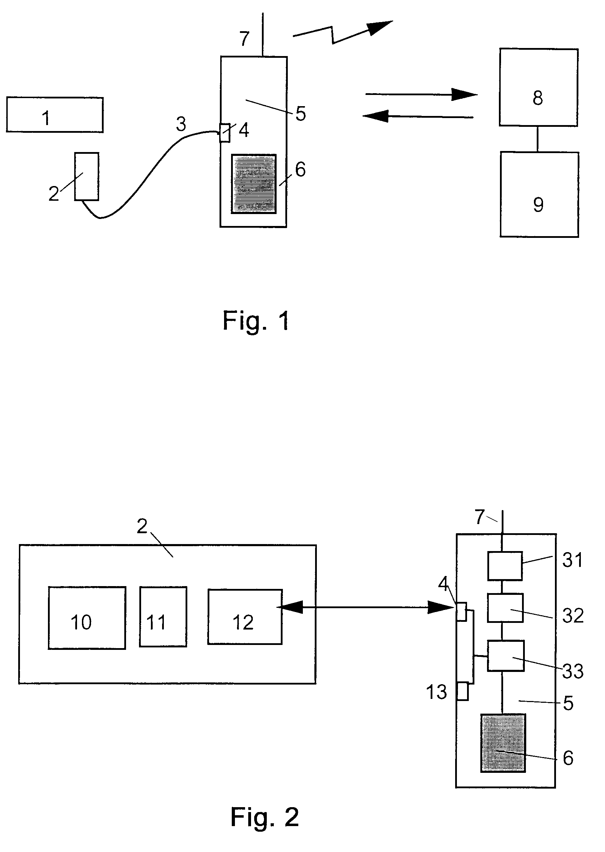

Figur 1 zeigt ein Sende/Empfangsgerät 5, das in Funkverbindung mit der Funkbasisstation 8 steht. Die Funkbasisstation steht in Verbindung mit einer Datenbank 9, die Informationen über unterschiedlichste Standorte enthält. Zwar ist mit der Aufnahme der Funkverbindung eine Lokalisierung des Senders/Empfängers möglich, doch ist die Ortsauflösung für das erfindungsgemäße Verfahren nicht ausreichend. Daher wird am Standort 1 des Senders/Empfängers eine Kennung angebracht, die eine genaue Positionsbestimmung enthält. Diese Kennung wird von einem geeigneten Gerät 2 gelesen und über die Verbindung 3 in den Sende/Empfanger eingespeichert. Das Mobilgerät 5 sendet über seine Antenne 7 die gespeicherten Positionsdaten des Standorts 1 an die Funkbasisstation 8. Mit den Positionsdaten ist es möglich, aus der Datenbank 9 mit dem Standort 1 korrelierte Informationen aufzurufen und wieder an das Mobilgerät 5 zur Ausgabe zu übertragen.

In Figur 2 wird eine beispielhafte Lösung mit einem Barcode-Scanner vorgestellt. Am Standort 1 wird ein Barcode angebracht. Er definiert die genaue Position des Standorts und des davor stehenden Benutzers. Über die Kennungsleseeinheit 2 erfolgt die Datenaufnahme für die Mobilstation 5. Der Strichcode-Scanner 10 liest die Daten und über das Interface 11 und die Codeauswertung 12 werden die eingescannten Daten an die Schnittstelle 4 des Mobilgeräts 5 weitergegeben. Diese Standortdaten sind gleichzeitig die Adresse der Datenbank, die zur Ermittlung der relevanten Informationen übertragen werden muß. Die Mobilstation 5 weist desweiteren eine Schnittstelle 13 zur Ausgabe der rückübertragenen Daten der Funkbasisstation 8 auf ein externnes Ausgabegerät auf.

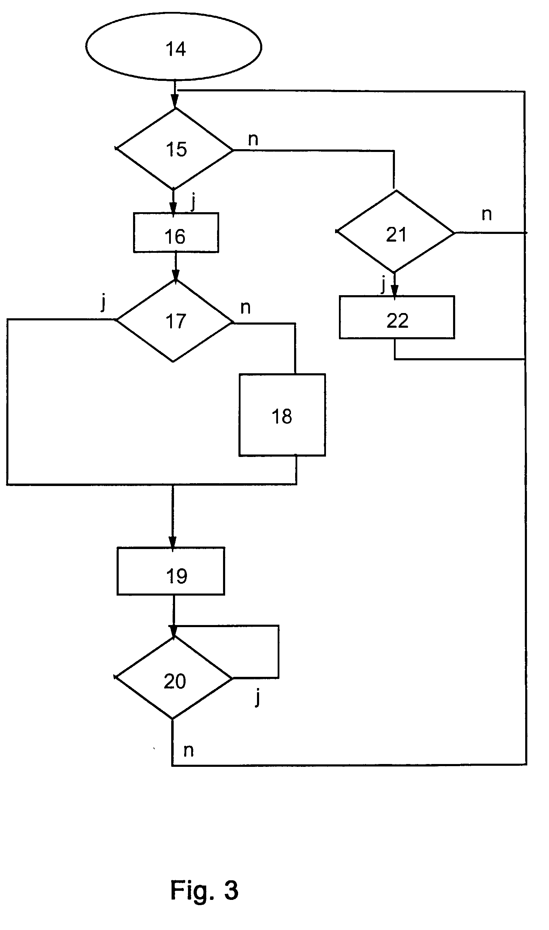

Figur 3 zeigt den Ablauf des erfindungsgemäßen Verfahrens. Nach dem Start, Schritt 14, wird der Scan-Vorgang eingeleitet. Im Schritt 15 erfolgt die Abfrage, ob ein Scan-Vorgang vorliegt. Liegt kein Scan-Vorgang vor, wird die Zeit tₑ im Schritt 21 abgewartet. Ist diese Zeit abgelaufen, geht das System wieder in die Position zwischen Schritt 14 und 15 zurück. Ist diese Totzeit überschritten, wird im Schritt 22 die Verbindung abgebaut. Falls ein Scan-Vorgang vorliegt, wird die Standortposition im Schritt 16 eingelesen und die Daten bestimmt. Im Schritt 17 wird die Entscheidung getroffen, ob eine Verbindung zur Funkbasisstation besteht oder nicht. Besteht die Verbindung noch nicht, wird sie im Schritt 18 aufgebaut. In beiden Fällen wird im Schritt 19 der Standort, d. h. die Positionsdaten an die Funkbasisstation übermittelt. Im Schritt 20 wird abgeprüft, ob Daten empfangen werden oder nicht. Solange Daten empfangen werden, bleibt das System in Empfangsposition. Sollte kein Empfang mehr vorliegen, wird das Verfahren unterbrochen. Ein Anwendungsbeispiel für ein Verfahren, bei dem ein Datenbankzugriff in Bezug auf Standort des Benutzers günstig ist, ist eine Realisierung als Museumsführer. An jedem Gegenstand der Ausstellung befindet sich ein Strichcode, der den Ausstellungsgegenstand identifiziert. Dieser Code enthält Informationen über den Standort des Benutzers und die Adresse der Datenbank, auf die zugegriffen werden soll, z. B. die Telefonnummer einer Datenbank. Der Code wird eingescannt und mit Hilfe der Adresse wird automatisch eine Verbindung zur gewünschten Datenbank hergestellt. Danach werden die Standortdaten des Benutzers über die Uplink-Verbindung des Systems an die Datenbank übertragen, dort ausgewertet und die dem Benutzerstandort zugeordneten Informationen auf dem Downlink ausgegeben. Die übertragenen Informationen können z. B. Erklärungen zu einem Ausstellungsgegenstand sein. In dieser Anwendung ist es nicht notwendig, jedesmal eine Verbindung zur Datenbank herzustellen. Vielmehr kann diese Verbindung nach Figur 3 zu Beginn aufgebaut und danach aufrechterhalten werden. Falls der Benutzer eine gewisse Zeit keine Informationen abruft, wird die Verbindung abgebaut. Bei einen Scan-Vorgang wird die Verbindung dann wieder hergestellt. Das erfindungsgemäße Verfahren arbeitet sowohl mit dem Kommunikationssystem DECT, als auch mit dem GSM-Verfahren. Das DECT-System ist für diese Anwendung besonders geeignet, da es sehr viele mobile Stationen, wie sie z. B. in einem Museumsbetrieb nötig wären, unterstützt. Der große Vorteil der vorgestellten Lösung ist die Verwendung vorhandener Infrastruktur, d. h. zur Realisierung eines solchen Museumsführers brauchen kaum zusätzliche Investitionen getätigt zu werden, wenn DECT-Systeme als Nebenstellenanlagen installiert werden. Das DECT-System erlaubt durch die Existenz seines 32 Kbit/s-Kanals auch die Übertragung audiovisueller Daten zum Benutzer. Dazu muß an die Mobilstation 5 über die Schnittstelle 13 ein geeignetes Ausgabegerät angeschlossen werden. Das Verfahren läßt sich ebenfalls als Stadtführer einsetzen. An allen für Touristen wichtigen Punkten einer Stadt werden Stationen mit Strichcodes installiert, über die bestimmte Informationen abgerufen werden können. Gerade bei dieser Anwendung, die typischerweise Abfragen mit großem zeitlichem Abstand beinhaltet, ist ein Abbau der Verbindung zur Funkbasisstation vorgesehen.

In einer weiteren Ausführungsform ist es möglich, die Positionsdaten statt über einen Strichcodeleser direkt über die Tastatur 6 der Mobilstation 5 einzugeben. Dazu muß der Standort 1 des beobachteten Gegenstands mit einer codierten Zahl versehen sein. Dazu ist es notwendig, daß die Mobilstation zunächst Verbindung zur Funkbasisstation aufnimmt und anschließend der Zahlencode eingegeben wird. Das hat den Vorteil, daß kein zusätzlicher Barcode-Scanner mehr verwendet werden muß.

Ein weiteres Ausführungsbeispiel ist durch Einsatz von Transpondertechnik möglich. Damit werden Daten, die am Standort 1 in einem Näherungssender hinterlegt sind, über die Schnittstelle 4 des Mobilgerätes eingelesen.

Alle vorgestellten Ausführungsformen können auch über GSM-Verbindungen realisiert werden.

Sobald die Verbindung Daten-Mobilgerät 5 aufgenommen wurde, ist es möglich, geeignete Funktionen zu definieren, die eine Steuerung der Datenbank bewirken.
Die Steuerung der Datenbank erfolgt üblicherweise mit DTMF-Tönen. Im GSM-System wird der Tastendruck auf eine bestimmte Taste erkannt, der zugehörige Code in einem Signalisierungskanal übertragen und als Ton generiert. Der DTMF-Detektor der Datenbank erkennt die Tonfolge und ordnet sie einer Taste oder einer Tastenfolge zu. Für eine spezielle Taste wurde zuvor ein Befehlssatz vereinbart, z.B. Betätigung der 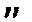 0" = Wiederholung der Ausgabe, 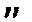 1" = Weitere Informationen usw.

Der Benutzer kann durch Dialog mit der Datenbank selbst definierte Informationen, z. B. Wegbeschreibungen, nahegelegene Restaurants usw. abfragen.

## Patentansprüche

1. Verfahren zur Datenübermittlung von einer Funkbasisstation (8) zu einem mobilen Sende/Empfangsgerät (5), wobei die Daten Informationen enthalten, die sich auf einen aktuellen Standort (1) des Sende/Empfangsgeräts (5) beziehen, dadurch gekennzeichnet, daß der aktuelle Standort (1) in Form codierter Positionsdaten (16) am Sende/Empfangsgerät (5) eingegeben wird, daß eine Verbindung zur Funkbasisstation (8) aufgenommen wird und mithilfe der übermittelten Positionsdaten (16) Informationen einer Datenbank (9) abgerufen und zum Sende/Empfangsgerät (5) übertragen werden.

2. Verfahren zur Datenübermittlung nach Anspruch 1, dadurch gekennzeichnet, daß der aktuelle Standort (1) mit einem Strichcode versehen ist und die Positionsdaten (16) über einen Strichcodeleser (2) in das Sende/Empfangsgerät (5) eingelesen werden.

3. Verfahren zur Datenübermittlung nach Anspruch 1, dadurch gekennzeichnet, daß der aktuelle Standort (1) mit einem Zahlencode versehen ist, der über eine Tastatur (6) des Sende/Empfangsgeräts (5) eingegeben wird.

4. Verfahren zur Datenübermittlung nach Anspruch 1, dadurch gekennzeichnet, daß der aktuelle Standort (1) über eine Transponderverbindung die Positionsdaten übermittelt.

5. Verfahren zur Datenübermittlung nach einem der vorherigen Ansprüche, dadurch gekennzeichnet, daß die Verbindung zwischen Funkbasisstation (8) und Sende/Empfangsgerät (5) nach dem DECT-Verfahren oder dem GSM-Verfahren erfolgt.

6. Verfahren zur Datenübermittlung nach einem der vorherigen Ansprüche, dadurch gekennzeichnet, daß über die Verbindung des Sende/Empfangsgerät (5) zur Funkbasisstation (8) Befehle zur Steuerung der Datenbank (9) übertragen werden.

7. Verfahren zur Datenübermittlung nach einem der vorherigen Ansprüche, dadurch gekennzeichnet, daß die Verbindung zwischen Funkbasisstation (8) und Sende/Empfangsgerät (5) bis zum Ablauf einer Zeit (tₑ) nach Beendigung der Datenübermittlung aufrechterhalten bleibt, wenn keine weitere Eingabe von Positionsdaten erfolgt.

8. Sende/Empfangsgerät (5) mit einer Antenne (7) einem Duplexer (31) und einem mit ihm verbundenen Controller (32) zur Durchführung des Verfahren zur Datenübermittlung nach einem der vorherigen Ansprüche, dadurch gekennzeichnet, daß das Sende/Empfangsgerät (5) eine Schnittstelle (4) zum Controller zur Eingabe des aktuellen Standorts aufweist.

9. Vorrichtung nach Anspruch 8, dadurch gekennzeichnet, daß das Sende/Empfangsgerät (5) eine Schnittstelle (13) zum Anschluß von Eingabe- und/oder Ausgabeeinheiten besitzt.
